(19) Europäisches Patentamt
European Patent Office
Office européen des brevets

(11) **EP 4 718 382 A1**

(12) **EUROPEAN PATENT APPLICATION**

(43) Date of publication:
**01.04.2026 Bulletin 2026/14**

(21) Application number: **25205345.9**

(22) Date of filing: **29.09.2025**

(51) International Patent Classification (IPC):
**G06T 7/277** (2017.01)

(52) Cooperative Patent Classification (CPC):
**G06T 7/277;** G06T 2207/20104; G06T 2207/30196;
Y02B 20/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.09.2024 CN 202411380110**

(71) Applicant: **Guangzhou Haoyang Electronic Co.,
Ltd.
Guangzhou, Guangdong 511450 (CN)**

(72) Inventors:
• **PENG, Yingru**
**Guangzhou, Guangdong, 511450 (CN)**
• **JIANG, Weikai**
**Guangzhou, Guangdong, 511450 (CN)**
• **LIU, Jingan**
**Guangzhou, Guangdong, 511450 (CN)**
• **LIANG, Zhiguang**
**Guangzhou, Guangdong, 511450 (CN)**
• **HUANG, Qiancheng**
**Guangzhou, Guangdong, 511450 (CN)**

(74) Representative: **patcare Patentanwälte
Partnerschaft mbB
Bajuwarenring 21
82041 Oberhaching (DE)**

(54) **METHOD FOR MANUALLY TRACKING TARGET OBJECT WITH AID OF MACHINE VISION AND LIGHTING CONTROL SYSTEM**

(57)     A method for manually tracking a target object with aid of machine vision includes steps of: taking an image containing a target object by a camera with a known pose; calculating predicted state information of the target object containing a predicted coordinate position at a $t^{th}$ moment according to movement state information of the target object at a $(t-1)^{th}$ moment; taking a position of the target object at the $t^{th}$ moment manually input by a user as a real coordinate position; obtaining movement state information of the target object at the $t^{th}$ moment by combining the real coordinate position with the predicted state information; calculating a spatial coordinate position of the target object according to an estimated coordinate position contained in the movement state information by combining parameters of the camera; and sending the spatial coordinate position to a follow spotlight for tracking.

Taking an image containing a target object by a camera with known pose

↓

Calculating predicted state information of the target object at a $t^{th}$ moment according to movement state information of the target object at a $(t-1)^{th}$ moment

↓

Combining a position of the target object manually inputted by a user at the $t^{th}$ moment with the predicted state information to obtain movement state information of the target object at the $t^{th}$ moment

↓

Calculating a spatial coordinate position of the target object by combining the pose and internal parameters of the camera according to an estimated coordinate position contained in the movement state information at the $t^{th}$ moment,

↓

Tracking the object by a follow spotlight according to the spatial coordinate position

**FIG. 1**

**Description**

The present invention relates to the technical field of follow spotlights, and more specifically to a method for manually tracking a target object with aid of machine vision and a lighting control system.

In a current performance lighting system, a follow spotlight is usually used to follow a target object on a stage. In a traditional method, rotation of the follow spotlight is manually controlled by a lighting engineer to allow the spots projected by the follow spotlight to track and illuminate the target object. However, accuracy of manual tracking is not easy to be controlled, due to far distance between the follow spotlight and the stage.

In another common method, the target object wears a special active tag (such as a UWB tag) or a passive tag (such as an infrared marking point). Such method is not applicable in specific occasions that it may be inconvenient for the target object to wear the tag. In this method, data transmission of the active tag may be interfered by the object or a surrounding scene, and the passive tag may be blocked, which results in inaccurate positioning of the target object or positioning jitter.

In other methods, a camera is used to identify and track the target object. However, such method is easy to lose the target object in the case that a plurality of people are moving, a plurality of people are similar in a shape, or in situation with dark lighting.

Therefore, it is desirable to provide a method for tracking the target object without tags, while with high precision and continuous stability.

The present invention seeks to provide a solution to the before-mentioned problems and offers additional benefits to the existing prior art, which will become apparent in the following description. The present invention therefore provides a method for manually tracking a target object with aid of machine vision and a lighting control system, which can achieve manual tracking of the target object free from the problems of positioning jitter and poor accuracy.

One aspect of the invention provides a method for manually tracking a target object with aid of machine vision, comprising steps of: taking an image containing a target object on a stage by a camera with a known pose; calculating predicted state information of the target object containing a predicted coordinate position at a $t^{th}$ moment according to movement state information of the target object at a $(t-1)^{th}$ moment; taking a position of the target object at the $t^{th}$ moment manually input by a user as a real coordinate position; obtaining movement state information of the target object at the $t^{th}$ moment by combining the real coordinate position with the predicted state information; calculating a spatial coordinate position of the target object on the stage according to an estimated coordinate position contained in the movement state information of the target object at the $t^{th}$ moment, in combination with the pose and internal parameters of the camera; and sending the spatial coordinate position to a follow spotlight for tracking the target object.

In the method for manually tracking an object with aid of machine vision, the predicted coordinate position of the current moment is predicted according to the movement state information of the target object at the last moment, and the predicted coordinate position of the current moment is combined with the position of the target object manually inputted by the user at the current moment which is taken as the real coordinate position to obtain the estimated coordinate position of the target object at the current moment, and the follow spotlight follows the object according to the estimated coordinate position. That is, according to the present invention, the backend of the stage light fixture can correct the inputted real coordinate position of the target object at the current moment according to the predicted coordinate position, and automatically fine-tune the result of manual tracking of the user, which thus makes the positioning of the manual tracking of the user more accurate, avoiding spot jitter because of a tiny action of the input device, with better continuity of the manual tracking and not easy to lose the target object.

As a mature data processing algorithm, the Kalman filtering algorithm can make the result closer to an actual situation and more accurate by revising and predicting data step by step, the movement state information of the target object at the $t^{th}$ moment is obtained by combining the real coordinate position with the predicted state information particularly through Kalman filtering algorithm.

It is well known that the central point position of the target object has a small movement amplitude, and is easy for choosing and more in line with operation habits of the user, therefore it is preferably to input and calibrate the central point position of the rectangular frame of the object. For the purpose of this, according to an advantageous embodiment of the present invention, a rectangular frame of a target object is identified from the image containing the target object taken by the camera, and the predicted coordinate position of the target object includes a center point position of the predicted rectangular frame of the object, and the position of the target object inputted manually by the user is taken as a center point position of the real rectangular frame of the object.

The predicted coordinate position of the target object may further include a coordinate of a midpoint of a lower edge of the predicted rectangular frame of the object according to a preferable embodiment. The real coordinate position of the target object may further include a coordinate of a midpoint of a lower edge of the predicted rectangular frame of the object detected at the $t^{th}$ moment; and the movement state information of the target object at the $t^{th}$ moment is obtained by combining the real coordinate position with the predicted state information, with the coordinate of the midpoint of the lower edge of the rectangular frame of the object and the center point position of the rectangular frame of the object considered.

In such configuration, the coordinate of the midpoint of the lower edge of the rectangular frame of the object and the central point position of the rectangular frame of the object are simultaneously considered for prediction and correction. Therefore, two observation quantities are introduced and mutual constraints, which are applied to deduce the movement state information of the target object together, thus obtaining more accurate results.

Generally, when the rectangular frame of the object is identified, coordinates of an upper left corner and a lower right corner of the rectangular frame of the object can be obtained, and $(x, y)$ and $\delta_x$, $\delta_y$ can be calculated accordingly, and the central point position of the rectangular frame of the object can be calculated by using $(x, y)$ and $\delta_x$, $\delta_y$, which facilitates subsequent calculation of the predicted state information of the target object at the $t^{th}$ moment. As such, the movement state information of the target object at the $(t-1)^{th}$ moment is $X_{t-1} = (x, y, \delta_x, \delta_y, v_x, v_y)^T$, wherein $(x, y)$ is the coordinate of the midpoint of the lower edge of the rectangular frame of the object at the $(t-1)^{th}$ moment, $\delta_x$, $\delta_y$ are an offset from the midpoint of the lower edge of the rectangular frame of the object to the center point of the rectangular frame of the object at the $(t-1)^{th}$ moment, and $v_x$, $v_y$ represent a movement speed of the midpoint of the lower edge of the rectangular frame of the object at the $(t-1)^{th}$ moment, wherein at the $1^{st}$ moment, $v_x$, $v_y$ are both 0.

According to an advantageous embodiment, the movement state information of the target object at the $t^{th}$ moment is preferably:

$$\overline{X_t} = A * X_{t-1} \tag{1},$$

where A is a transfer matrix of a lighting control system, and in particular

$$A = \begin{pmatrix} 1, 0, 0, 0, \Delta t, 0 \\ 0, 1, 0, 0, 0, \Delta t \\ 0, 0, 1, 0, 0, 0 \\ 0, 0, 0, 1, 0, 0 \\ 0, 0, 0, 0, 1, 0 \\ 0, 0, 0, 0, 0, 1 \end{pmatrix},$$

and $\Delta t$ is a time interval between the $t^{th}$ moment and the $(t-1)^{th}$ moment.

Therefore, the predicted coordinate position of the target object at the $t^{th}$ moment can be obtained according to the predicted state information of the target object at the $t^{th}$ moment. In this case, at the $t^{th}$ moment, compared with the $(t-1)^{th}$ moment, only the coordinate of the midpoint of the lower edge of the rectangular frame of the object typically changes, with the offsets $\delta_x$ and $\delta_y$ from the midpoint of the lower edge of the rectangular frame of the object to the center point of the rectangular frame of the object unchanged, which reduces variables and thus facilitates calculation.

Particularly, the step of obtaining the movement state information of the target object at the $t^{th}$ moment by combining the real coordinate position of the target object manually inputted by the user at the $t^{th}$ moment with the predicted state information specifically comprises:

calculating a predicted error covariance matrix between the predicted coordinate position and the real coordinate position at the $t^{th}$ moment:

$$\overline{P_t} = A * P_{t-1} * A^T + Q \tag{2},$$

wherein Q is a diagonal matrix of 6*6, and $P_{t-1}$ is an error covariance matrix between the estimated coordinate position and the real coordinate position at the $(t-1)^{th}$ moment;
then obtaining a Kalman gain:

$$K_t = \overline{P_t} * H^T * (H * \overline{P_t} * H^T + R)^{-1} \tag{3},$$

wherein H is an observation matrix, and in particular

$$H = \begin{pmatrix} 1,0,0,0,0,0 \\ 0,1,0,0,0,0 \\ 1,0,1,0,0,0 \\ 0,1,0,1,0,0 \end{pmatrix},$$

and R is a diagonal matrix of 4*4;

finally, calculating the movement state information of the target object at the $t^{th}$ moment:

$$X_t = \overline{X_t} + K_t * (Z_t - H * \overline{X_t}) \tag{4},$$

wherein $Z_t$ is the real coordinate position of the target object at the $t^{th}$ moment and is equal to $(Z_{bx}, Z_{by}, Z_{jx}, Z_{jy})$; $(Z_{bx}, Z_{by})$ is the coordinate of the midpoint of the lower edge of the real rectangular frame of the object detected at the $t^{th}$ moment; and $(Z_{jx}, Z_{jy})$ is the position of the target object manually inputted by the user at the $t^{th}$ moment; and updating the error covariance matrix between the estimated coordinate position and the real coordinate position at the $t^{th}$ moment:

$$P_t = (I - K_t * H) * \overline{P_t} \tag{5}$$

wherein I is an identity matrix.

By solving the formulas (1), (2), (3) and (4) in sequence, the movement state information $X_t$ of the target object at the $t^{th}$ moment which combines the real coordinate position and the predicted state information can be obtained under considering the coordinate of the midpoint of the lower edge of the rectangular frame of the object and the central point position of the rectangular frame of the object at the same time. The obtained movement state information $X_t$ of the target object includes the estimated coordinate position. In addition, the error covariance matrix $P_t$ between the estimated coordinate position and the real coordinate position at the $t^{th}$ moment is updated according to the formula (5), which is provided for a predicted error covariance matrix $\overline{P}_{t+1}$ between thr predicted coordinate position and the real coordinate position at the $(t+1)^{th}$ moment.

Considering that the follow spotlight illuminates to the target object generally by illuminating to the ground where the target object is located, the spatial coordinate position of the target object on the stage is preferably calculated according to the coordinate of the midpoint of the lower edge of the estimated rectangular frame of the object in the estimated coordinate position by combining the pose and internal parameters of the camera, according to the present invention, which is sent to the follow spotlight for tracking. Such way can obtain better stage effects with the follow spotlight tracking the target object according to the estimated coordinate of the midpoint of the lower edge of the rectangular frame of the object.

Particularly, the image containing the target object taken by the camera is displayed by a display screen, and the position of the target object at the $t^{th}$ moment manually inputted on the display screen by the user through a cursor is taken as the real coordinate position. With the display screen, the user can directly and quickly input the position of the target object at the $t^{th}$ moment, and can predict the position of the target object at the next moment to a certain extent, thus improving the input speed.

Generally, it is quick and easy to use the mouse, joystick or touch screen, which is in line with operating habits of the user. Therefore, a position of the cursor is preferably controlled by the user through a mouse, a joystick or a touch screen according to the present invention, and the position of the cursor at the $t^{th}$ moment is taken as the position of the target object.

Another aspect of the invention provides a lighting control system adapted to conduct the method in any case as described above, including a camera with a known pose for taking an image containing a target object; an input device for a user to manually input a position of the target object at a $t^{th}$ moment; a server configured to calculate predicted state information of the target object containing a predicted coordinate position at the $t^{th}$ moment according to movement state information of the target object at a $(t-1)^{th}$ moment, obtain a movement state information of the target object at the $t^{th}$ moment by combining a real coordinate position with the predicted state information, and calculate a spatial coordinate position of the target object on a stag by combining an estimated coordinate position and the pose together with internal parameters of the camera; and a follow spotlight configured to track the target object according to the spatial coordinate position.

The lighting control system in the present embodiment utilizes the machine vision to automatically aid manual tracking of the target object, making manual tracking more accurate and smoother, thus invisibly improving user's experience.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown:

> FIG. 1 a schematic flowchart of a method for manually tracking a target object with aid of machine vision according to an embodiment of the present invention;

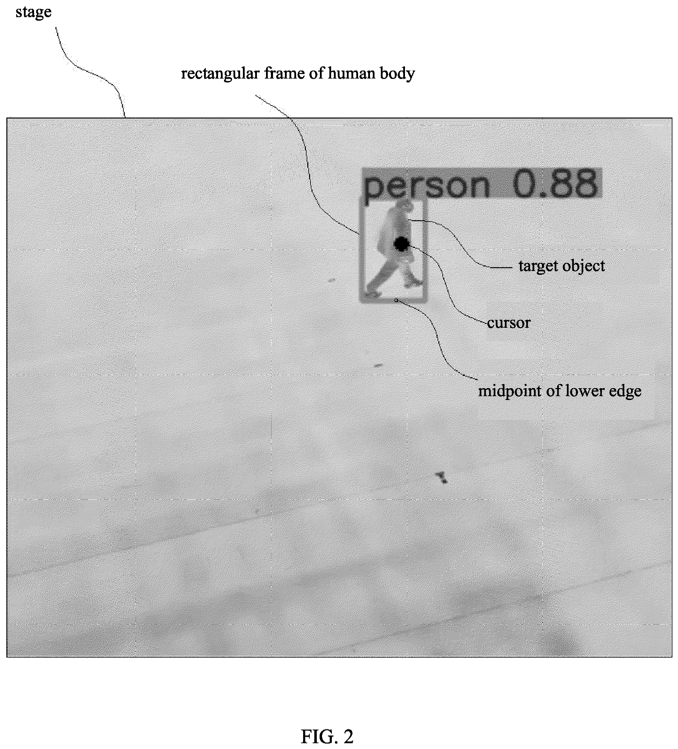

> FIG. 2 a schematic diagram of an image displayed on a display screen according to an embodiment of the present invention; and
> FIG. 3 a structural diagram of a lighting control system according to an embodiment of the present invention.

Accompanying drawings are for illustrative purposes only and shall not be construed as a limitation to this patent. In order to better illustrate this embodiment, some parts of the drawings may be omitted, enlarged or reduced, which do not represent actual product sizes. For a person skilled in the art, it is understandable that certain well-known structures and their descriptions may be omitted from the accompanying drawings. Location relationships described in the accompanying drawings are for illustrative purposes only and are not to be construed as a limitation to this patent.

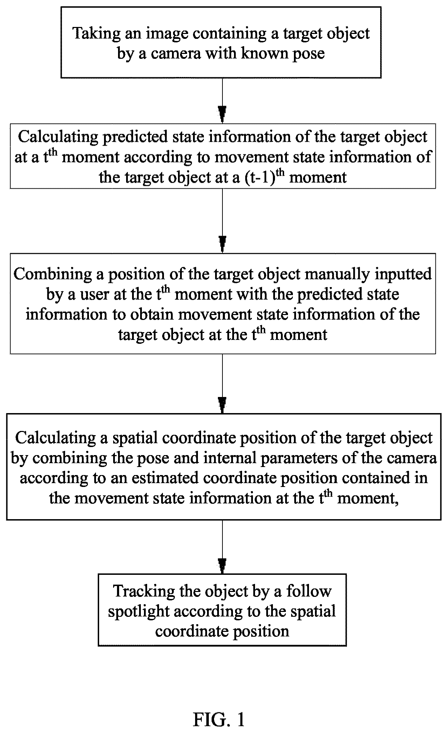

FIG. 1 depicts a method for manually tracking a target object with aid of machine vision according to an embodiment of the present invention. According to this embodiment, an image containing a target object is taken by a camera with a known pose including a position and a posture. A predicted state information of the target object containing a predicted coordinate position at $t^{th}$ moment is calculated according to movement state information of the target object at a $(t-1)^{th}$ ($t \geq 2$) moment. A position of the target object at the $t^{th}$ moment manually input by a user is taken as a real coordinate position. Then the real coordinate position is combined with the predicted state information to obtain a movement state information of the target object at the $t^{th}$ moment. According to an estimated coordinate position contained in the obtained movement state information of the target object at the $t^{th}$ moment, a spatial coordinate position of the target object on a stage is calculated in combination with the pose and internal parameters of the camera. Such spatial coordinate position is sent to a follow spotlight for tracking the object.

In this method, the predicted coordinate position of the current moment is predicted according to the movement state information of the target object at the last moment, and the predicted coordinate position of the current moment is combined with the position of the target object manually inputted by the user at the current moment as the real coordinate position to obtain the estimated coordinate position of the target object at the current moment, and the follow spotlight follows the object according to the estimated coordinate position. That is, the backend can correct the inputted real coordinate position of the target object at the current moment according to the predicted coordinate position, and automatically fine-tune the result of manual tracking of the user, which thus makes the positioning of manual tracking of the user more accurate, with less spot jitter because of tiny action of the input device, having better continuity of manual tracking, and not easy to lose the target object.

It should be noted that in the present embodiment, both the movement state information and the predicted state information generally includes position and speed information. However, in other embodiments, acceleration information may be further included. In addition to the position of the target object manually inputted by the user, the real coordinate position at the $t^{th}$ moment may also contain other real position information.

In this embodiment, the pose of the camera is calibrated by Zhang's Calibration Method, and the position information of the target object is then calculated in an image coordinate system. The movement state information of the target object in a camera coordinate system at the $t^{th}$ moment is further calculated. Then, in combination with the pose of the camera and the internal parameters for taking the image, the spatial coordinate position of the target object on the stage can be obtained through mapping with an Epipolar Geometry Constraint algorithm (namely the actual position, the coordinate system generally takes the center of the stage as zero, the ground of the stage is taken as an XY plane, and a direction perpendicular to the stage is a Z axis direction), thus achieving tracking of the object by the follow spotlight.

In a preferred embodiment of the present invention, the real coordinate position is combined with the predicted state information by means of Kalman filtering to obtain the movement state information of the target object at the $t^{th}$ moment. As a mature data processing algorithm, the Kalman filtering can make the result closer to an actual situation and more accurate by revising and predicting data step by step.

In a preferred embodiment of the present invention, a rectangular frame of an object is identified from the image containing the target object taken by the camera, and the predicted coordinate position of the target object includes a center point position of the predicted rectangular frame of the object, and the position of the target object inputted manually by the user is taken as a center point position of a real rectangular frame of the object. That is, the central point position of the rectangular frame of the object is inputted and calibrated, as the central point position of the target object has a small movement amplitude, which is easy for choosing and more in line with operation habits of the user.

In this embodiment, a v7 version of a YOLO algorithm is utilized to identify the rectangular frame of the object from the image taken by the camera containing the target object. However, other algorithms or versions may also be used in other embodiments.

In a preferred embodiment of the present invention, the predicted coordinate position of the target object further includes a coordinate of a midpoint of a lower edge of the predicted rectangular frame of the object, correspondingly the real coordinate position of the target object further includes a coordinate of a midpoint of a lower edge of the real rectangular frame of the object detected at the $t^{th}$ moment. In this case, the movement state information of the target object at the $t^{th}$ moment is obtained, with the combination of the real coordinate position and the predicted state information, and considering the coordinate of the midpoint of the lower edge of the rectangular frame of the object and the center point position of the rectangular frame of the object. With the coordinate of the midpoint of the lower edge of the rectangular frame of the object and the central point position of the rectangular frame of the object simultaneously considered for prediction and correction, two observations are introduced and mutual constraints, which are applied to deduce the movement state information of the target object together, thus obtaining more accurate results.

In a preferred embodiment of the present invention, the movement state information of the target object at the $(t-1)^{th}$ moment is $X_{t-1} = (x, y, \delta_x, \delta_y, v_x, v_y)^T$, wherein $(x, y)$ is the coordinate of the midpoint of the lower edge of the rectangular frame of the object at the $(t-1)^{th}$ moment, $\delta_x, \delta_y$ are an offset from the midpoint of the lower edge of the rectangular frame of the object to the center point of the rectangular frame of the object at the $(t-1)^{th}$ moment, and $v_x, v_y$ represent a movement speed of the midpoint of the lower edge of the rectangular frame of the object at the $(t-1)^{th}$ moment, wherein at the 1st moment, $v_x, v_y$ are both 0. Generally, after the rectangular frame of the object is identified, coordinates of an upper left corner and a lower right corner of the rectangular frame of the object can be obtained, and $(x, y)$ and $\delta_x, \delta_y$ can be calculated accordingly, and the central point position of the rectangular frame of the object can be calculated by using $(x, y)$ and $\delta_x$ and $\delta_y$, which facilitates the subsequent calculation of the predicted state information of the target object at the $t^{th}$ moment.

If a rectangular frame of the object obtained at a 1st moment is $(x_l, y_t, x_r, y_b)$, wherein $(x_i, y_t)$ is the coordinate of the upper left corner of the rectangular frame of the object, and $(x_r, y_b)$ is the coordinate of the lower right corner of the rectangular frame of the object,, the movement state information of the target object at the 1st moment is $X_1 = (x, y, \delta_x, \delta_y, v_x, v_y)^T = [x_1+(x_r-x_l)/2, y_b, 0, (y_t-y_b)/2, 0, 0]^T$.

In a preferred embodiment of the present invention, the predicted state information of the target object at the $t^{th}$ moment is as follows:

$$\overline{X_t} = A * X_{t-1} \tag{1},$$

A is a transfer matrix of a lighting control system, in particular

$$A = \begin{pmatrix} 1, 0, 0, 0, \Delta t, 0 \\ 0, 1, 0, 0, 0, \Delta t \\ 0, 0, 1, 0, 0, 0 \\ 0, 0, 0, 1, 0, 0 \\ 0, 0, 0, 0, 1, 0 \\ 0, 0, 0, 0, 0, 1 \end{pmatrix},$$

$\Delta t$ is a time interval between the $t^{th}$ moment and the $(t-1)^{th}$ moment, and the predicted coordinate position of the target object at the $t^{th}$ moment can be obtained according to the predicted state information of the target object at the $t^{th}$ moment. By default, in this embodiment, at the $t^{th}$ moment, compared with the $(t-1)^{th}$ moment, only the coordinate of the midpoint of the lower edge of the rectangular frame of the object changes, with the offsets $\delta_x$ and $\delta_y$ from the midpoint of the lower edge of the rectangular frame of the object to the center point of the rectangular frame of the object unchanged, which reduces variables and thus facilitates calculation.

In a preferred embodiment of the present invention, the method of combining the real coordinate position of the target object manually inputted by the user at the $t^{th}$ moment with the predicted state information to obtain the movement state information of the target object at the $t^{th}$ moment is specifically as follows:

a predicted error covariance matrix between the predicted coordinate position and the real coordinate position at the $t^{th}$ moment is calculated as follows:

$$\overline{P_t} = A * P_{t-1} * A^T + Q \qquad (2),$$

wherein Q is a diagonal matrix of 6*6, and $P_{t-1}$ is an error covariance matrix between the estimated coordinate position and a real coordinate position at the $(t-1)^{th}$ moment;

then a Kalman gain is obtained:

$$\mathbf{K_t} = \overline{P_t} * H^T * (H * \overline{P_t} * H^T + R)^{-1} \qquad (3),$$

wherein H is an observation matrix, in particular

$$\mathbf{H} = \begin{pmatrix} \mathbf{1, 0, 0, 0, 0, 0} \\ \mathbf{0, 1, 0, 0, 0, 0} \\ \mathbf{1, 0, 1, 0, 0, 0} \\ \mathbf{0, 1, 0, 1, 0, 0} \end{pmatrix},$$

and R is a diagonal matrix of 4*4;

finally, the movement state information of the target object at the $t^{th}$ moment is calculated:

$$X_t = \overline{\mathbf{X_t}} + \mathbf{K_t} * (\mathbf{Z_t} - \mathbf{H} * \overline{\mathbf{X_t}}) \qquad (4),$$

wherein Zt is the real coordinate position of the target object at the $t^{th}$ moment and is equal to $(Z_{bx}, Z_{by}, Z_{jx}, Z_{jy})$; $(Z_{bx}, Z_{by})$ is the coordinate of the midpoint of the lower edge of the real rectangular frame of the object detected at the $t^{th}$ moment; and $(Z_{jx}, Z_{jy})$ is the position of the target object manually inputted by the user at the $t^{th}$ moment;

the error covariance matrix between the estimated coordinate position and the real coordinate position at the $t^{th}$ moment is updated:

$$P_t = (I - \mathbf{K_t} * \mathbf{H}) * \overline{P_t} \qquad (5)$$

wherein I is an identity matrix.

By calculating the formulas (1), (2), (3) and (4) in sequence, the movement state information $X_t$ of the target object at the $t^{th}$ moment which combines the real coordinate position and the predicted state information can be obtained under considering the coordinate of the midpoint of the lower edge of the rectangular frame of the object and the central point position of the rectangular frame of the object at the same time, the obtained movement state information $X_t$ of the target object includes the estimated coordinate position. In addition, the error covariance matrix $P_t$ between the estimated coordinate position and the real coordinate position at the $t^{th}$ moment is updated according to the formula (5), which is provided for a predicted error covariance matrix $\overline{P}_{t+1}$ between a predicted coordinate position and a real coordinate position at a $(t+1)^{th}$ moment.

The values of the diagonal matrix Q and R are calculated according to a height of the rectangular frame of the object at the corresponding moment.

It should be noted that in this embodiment, an error covariance matrix $P_0$ between an estimated coordinate position and a real coordinate position at the $1^{st}$ moment is an identity matrix of 6*6.

In a preferred embodiment of the present invention, the spatial coordinate position of the target object on the stage is calculated by combining the coordinate of the midpoint of the lower edge of the estimated rectangular frame of the object in the estimated coordinate position with the pose and internal parameters of the camera, which is sent to the follow spotlight for tracking. As the follow spotlight illuminates to the target object by generally illuminating to the ground where the target object is located, better stage effects can be obtained with the follow spotlight tracking the object according to the estimated coordinate of the midpoint of the lower edge of the rectangular frame of the object.

In a preferred embodiment of the present invention, a display screen is utilized to display the image containing the target object taken by the camera, and the user manually inputs the position of the target object at the $t^{th}$ moment on the display screen through a cursor as the real coordinate position. Through the display screen, the user can directly and quickly input the position of the target object at the $t^{th}$ moment, and can predict the position of the target object at the next moment to a certain extent, thus improving the input speed.

Preferably, the number of cameras is 3 or more, and the display screen displays a picture taken by at least one of the cameras for the user to manually input the position of the target object at the $t^{th}$ moment on the display screen through the cursor.

It is quick and easy to use the mouse, joystick or touch screen, which is in line with operating habits of the user. According to the present invention, a position of the cursor can be controlled by the user through a mouse, a joystick or a touch screen, and the position of the cursor at the $t^{th}$ moment is taken as the position of the target object. Therefore, the user utilizes the mouse, joystick, or touch screen to control the cursor to follow the target object, and the position of the cursor at the $t^{th}$ moment (the cursor does not necessarily stay at this position, but may only be at this position at this moment) is taken as the position of the target object. In this embodiment, the joystick is utilized to control the movement of the cursor.

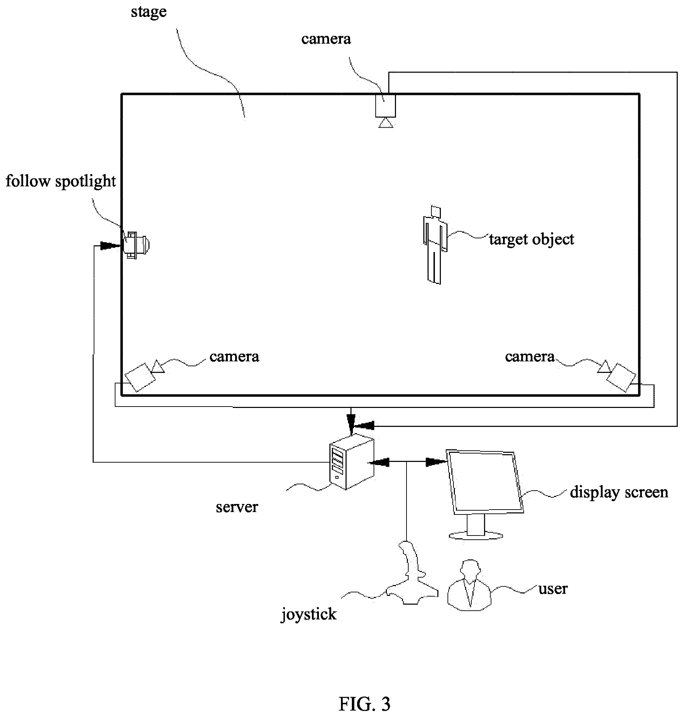

FIG. 3 provides a lighting control system, which is adapted to conduct the method in any case described above. The lighting control system in this embodiment includes a camera with a known pose for taking an image containing a target object, an input device for a user to manually input a position of the target object at a $t^{th}$ moment, as well as a server and a follow spotlight. The server is configured to calculate the predicted state information of the target object containing a predicted coordinate position at the $t^{th}$ moment according to movement state information of the target object at a $(t-1)^{th}$ moment, combine a real coordinate position with the predicted state information to obtain movement state information of the target object at the $t^{th}$ moment, and further combine an estimated coordinate position and the pose and internal parameters of the camera to calculate a spatial coordinate position of the target object on a stage. The follow spotlight is configured to track the target object according to the spatial coordinate position.

The lighting control system in the present embodiment utilizes the machine vision to automatically aid manual tracking of the object, making manual tracking more accurate and smoother, meanwhile invisibly improving user's experience.

In this embodiment, the server is configured to convert the spatial coordinate position of the target object on the stage into an angle control command of the follow spotlight, and send to the follow spotlight to track the target object according to a protocol such as DMX512 or Artnet.

The lighting control system further includes a display screen. The user directly inputs, through the input device, the position of the target object on the display screen by controlling the cursor. Compared with inputting by looking at the stage in reality, the user does not need to convert the orientation to be consistent with the spotlight, therefore it is more convenient for inputting, and a relative position with respect to the follow spotlight is not required to be taken into account.

Obviously, the above embodiments of the present invention are only examples for the purpose of clearly illustrating the present invention and are not a limitation to the embodiments of the present invention. For an ordinary person skilled in the field, other changes or modifications in different forms can also be made on the basis of the above description. It is not necessary and cannot enumerate all the embodiments herein. Any modification, equivalent substitution, improvement, etc. made within the spirit and principles of the present invention shall be included in the protection scope of the claims of the present invention.

**Claims**

1. A method for manually tracking a target object with aid of machine vision, comprising steps of:

   taking an image containing a target object on a stage by a camera with a known pose;
   calculating a predicted state information of the target object containing a predicted coordinate position at a $t^{th}$ moment according to a movement state information of the target object at a $(t-1)^{th}$ moment;
   taking a position of the target object at the $t^{th}$ moment manually input by a user as a real coordinate position;
   obtaining a movement state information of the target object at the $t^{th}$ moment by combining the real coordinate position and the predicted state information;
   calculating a spatial coordinate position of the target object on the stage according to an estimated coordinate position contained in the movement state information of the target object at the $t^{th}$ moment, in combination with the pose and internal parameters of the camera; and
   sending the spatial coordinate position to a follow spotlight for tracking the target object on the stage.

2. The method according to claim 1, wherein the movement state information of the target object at the $t^{th}$ moment is obtained by combining the real coordinate position with the predicted state information through Kalman filtering algorithm.

3. The method according to claim 1 or 2, wherein a rectangular frame of the target object is identified from the image containing the target object taken by the camera, and the predicted coordinate position of the target object comprises a center point position of the predicted rectangular frame of the object, and the position of the target object inputted manually by the user is taken as a center point position of a real rectangular frame of the object.

4. The method according to claim 3, wherein the predicted coordinate position of the target object further comprises a coordinate of a midpoint of a lower edge of the predicted rectangular frame of the object, the real coordinate position of the target object further comprises a coordinate of a midpoint of a lower edge of the real rectangular frame of the object detected at the $t^{th}$ moment, and the movement state information of the target object at the $t^{th}$ moment is obtained by combining the real coordinate position with the predicted state information, with the coordinate of the midpoint of the lower edge of the rectangular frame of the object and the center point position of the rectangular frame of the object considered.

5. The method according to any one of the preceding claims, wherein the movement state information of the target object at the $(t-1)^{th}$ moment is $X_{t-1} = (x, y, \delta_x, \delta_y, v_x, v_y)^T$, wherein $(x, y)$ is the coordinate of the midpoint of the lower edge of the rectangular frame of the object at the $(t-1)^{th}$ moment, $\delta_x, \delta_y$ are an offset from the midpoint of the lower edge of the rectangular frame of the object to the center point of the rectangular frame of the object at the $(t-1)^{th}$ moment, and $v_x, v_y$ represent a movement speed of the midpoint of the lower edge of the rectangular frame of the object at the $(t-1)^{th}$ moment, wherein at the 1st moment, $v_x, v_y$ are both 0.

6. The method according to any one of the preceding claims, wherein the predicted state information of the target object at the $t^{th}$ moment is as follows:

$$\overline{X_t} = A * X_{t-1} \tag{1},$$

in which A is a transfer matrix of a lighting control system, and

$$A = \begin{pmatrix} 1, 0, 0, 0, \Delta t, 0 \\ 0, 1, 0, 0, 0, \Delta t \\ 0, 0, 1, 0, 0, 0 \\ 0, 0, 0, 1, 0, 0 \\ 0, 0, 0, 0, 1, 0 \\ 0, 0, 0, 0, 0, 1 \end{pmatrix},$$

$\Delta t$ is a time interval between the $t^{th}$ moment and the $(t-1)^{th}$ moment, and
the predicted coordinate position of the target object at the $t^{th}$ moment is obtained according to the predicted state information of the target object at the $t^{th}$ moment.

7. The method according to any one of the preceding claims, wherein the step of obtaining the movement state information of the target object at the $t^{th}$ moment by combining the real coordinate position of the target object manually inputted by the user at the $t^{th}$ moment with the predicted state information comprises:

calculating a predicted error covariance matrix between the predicted coordinate position and the real coordinate position at the $t^{th}$ moment:

$$\overline{P_t} = A * P_{t-1} * A^T + Q \tag{2},$$

wherein Q is a diagonal matrix of 6*6, and $P_{t-1}$ is an error covariance matrix between the estimated coordinate position and the real coordinate position at the $(t-1)^{th}$ moment;

obtaining a Kalman gain:

$$\mathbf{K_t} = \overline{P_t} * H^T * (H * \overline{P_t} * H^T + R)^{-1} \tag{3},$$

wherein H is an observation matrix, and

$$H = \begin{pmatrix} 1, 0, 0, 0, 0, 0 \\ 0, 1, 0, 0, 0, 0 \\ 1, 0, 1, 0, 0, 0 \\ 0, 1, 0, 1, 0, 0 \end{pmatrix},$$

and R is a diagonal matrix of 4*4;

calculating the movement state information of the target object at the $t^{th}$ moment:

$$X_t = \overline{X_t} + \mathbf{K_t} * (\mathbf{Z_t} - \mathbf{H} * \overline{X_t}) \tag{4},$$

wherein Zt is the real coordinate position of the target object at the $t^{th}$ moment and is equal to $(Z_{bx}, Z_{by}, Z_{jx}, Z_{jy})$; $(Z_{bx}, Z_{by})$ is the coordinate of the midpoint of the lower edge of the real rectangular frame of the object detected at the $t^{th}$ moment; and $(Z_{jx}, Z_{jy})$ is the position of the target object manually inputted by the user at the $t^{th}$ moment; and updating the error covariance matrix between the estimated coordinate position and the real coordinate position at the $t^{th}$ moment:

$$P_t = (I - \mathbf{K_t} * H) * \overline{P_t} \tag{5}$$

wherein I is an identity matrix.

8. The method according to any one of claims 4 to 7, wherein the spatial coordinate position of the target object on the stage is calculated according to a coordinate of a midpoint of a lower edge of the estimated rectangular frame of the object in the estimated coordinate position by combining the pose and internal parameters of the camera, which is sent to the follow spotlight for tracking the target object.

9. The method according to any one of the preceding claims, wherein the image containing the target object taken by the camera is displayed by a display screen, and the position of the target object at the $t^{th}$ moment manually inputted on the display screen by the user through a cursor is taken as the real coordinate position.

10. The method according to claim 9, wherein a position of the cursor is controlled by the user through a mouse, a joystick or a touch screen, and the position of the cursor at the $t^{th}$ moment is taken as the position of the target object.

11. A lighting control system adapted to conduct the method according to any one of the preceding claims, comprising:

a camera with a known pose, which is configured for taking an image containing a target object;
an input device, which is configured for a user to manually input a position of the target object at a $t^{th}$ moment;
a server, which is configured to calculate a predicted state information of the target object containing a predicted coordinate position at the $t^{th}$ moment according to a movement state information of the target object at a $(t-1)^{th}$ moment, obtain a movement state information of the target object at the $t^{th}$ moment by combining a real coordinate position with the predicted state information, and calculate a spatial coordinate position of the target object on a stag by combining an estimated coordinate position contained in the movement state information and the pose together with internal parameters of the camera; and
a follow spotlight, which is configured to track the target object according to the spatial coordinate position.

Taking an image containing a target object
by a camera with known pose

Calculating predicted state information of the target object
at a $t^{th}$ moment according to movement state information of
the target object at a $(t-1)^{th}$ moment

Combining a position of the target object manually inputted
by a user at the $t^{th}$ moment with the predicted state
information to obtain movement state information of the
target object at the $t^{th}$ moment

Calculating a spatial coordinate position of the target object
by combining the pose and internal parameters of the camera
according to an estimated coordinate position contained in
the movement state information at the $t^{th}$ moment,

Tracking the object by a follow
spotlight according to the spatial
coordinate position

FIG. 1

stage

rectangular frame of human body

person 0.88

target object

cursor

midpoint of lower edge

FIG. 2

FIG. 3

**Europäisches Patentamt**
**European Patent Office**
**Office européen des brevets**

# EUROPEAN SEARCH REPORT

**Application Number**

EP 25 20 5345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/285854 A1 (LADUKE THOMAS F [US] ET AL) 24 November 2011 (2011-11-24) * abstract; claims 1,11; figures 1,2,4 * * paragraphs [0026] - [0029] * * paragraphs [0031] - [0036] * | 1-11 | INV. G06T7/277 |
| A | PRAKASH DONA ET AL: "Automatic human tracking theatrical spotlight", 2015 INTERNATIONAL CONFERENCE ON INNOVATIONS IN INFORMATION, EMBEDDED AND COMMUNICATION SYSTEMS (ICIIECS), IEEE, 19 March 2015 (2015-03-19), pages 1-4, XP033192264, DOI: 10.1109/ICIIECS.2015.7192974 ISBN: 978-1-4799-6817-6 [retrieved on 2015-08-12] * abstract; figures 1-6 * * sections II, IV and V * | 1-11 | |
| A | BAI SHILEI ET AL: "Research on Stage Automatic Light-following System Based on Trajectory Prediction", 2021 INTERNATIONAL CONFERENCE ON CULTURE-ORIENTED SCIENCE & TECHNOLOGY (ICCST), IEEE, 18 November 2021 (2021-11-18), pages 543-546, XP034049719, DOI: 10.1109/ICCST53801.2021.00118 [retrieved on 2021-12-03] * abstract; figures 2-3 * * sections II and III * | 1-11 | TECHNICAL FIELDS SEARCHED (IPC) G06T H05B |

The present search report has been drawn up for all claims

| Place of search | Date of completion of the search | Examiner |
|---|---|---|
| Munich | 18 December 2025 | Fronthaler, Hartwig |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 5345

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2025

| Patent document cited in search report | Publication date | Patent family member(s) | Publication date |
|---|---|---|---|
| US 2011285854 A1 | 24-11-2011 | NONE | |

EPO FORM P0459